Europäisches Patentamt

(19) European Patent Office

Office européen des brevets

(11) Publication number: **0 087 960**
**B1**

(12) **EUROPEAN PATENT SPECIFICATION**

(45) Date of publication of patent specification: 08.06.88

(21) Application number: 83301032.5

(22) Date of filing: 25.02.83

(51) Int. Cl.⁴: **H 02 K 5/136**

(54) Electric motor.

(30) Priority: 01.03.82 GB 8205913

(43) Date of publication of application:
07.09.83 Bulletin 83/36

(45) Publication of the grant of the patent:
08.06.88 Bulletin 88/23

(84) Designated Contracting States:
AT BE CH DE FR IT LI LU NL SE

(56) References cited:
DE-U-1 921 607
DE-U-1 942 598
US-A-3 335 323

(73) Proprietor: **TUSCAN ENGINEERING COMPANY LIMITED**
**North Road Industrial Estate**
**Bridgend Mid Glamorgan Wales CF31 3YF (GB)**

(72) Inventor: **Williams, Norman Ernest**
**The Poplars Cowbridge**
**S. Glamorgan Wales, CF7 7BD (GB)**

(74) Representative: **Allen, Oliver John Richard et al**
**Lloyd Wise, Tregear & Co. Norman House**
**105-109 Strand**
**London, WC2R 0AE (GB)**

EP 0 087 960 B1

Courier Press, Leamington Spa, England.

## Description

This invention relates to an electric motor for use in a potentially explosive atmosphere.

When using electrical machinery in an explosive atmosphere, such as is common in or near petrol pumps, it is essential to confine any terminations, contacts or parts subject to breakdown within a flameproof housing to prevent sparks or flames reaching the surrounding potentially explosive atmosphere. Furthermore the housing must be strong enough to withstand the pressure developed by an explosion within the housing.

When using such motors for petrol pumps the capacitor start induction run flameproof petrol pump motor has firmly established itself by virtue of its cheapness of construction utilising as it does a squirrel cage rotor and minimum maintenance. Single phase motors are used mainly in the U.K., U.S.A., and their export territories. Three phase motors are common in Europe.

To facilitate ease of control and in order to prevent such a motor being a hazard in a petrol pump two approaches have been used. The British and U.S. approach for electronically controlled petrol pumps has been to provide a single phase motor switched by a separate solid state relay nearby in the pump casing with a signal line running to the kiosk from the control unit of the pump. The motor is fully flameproofed to British Standards BS 5501 parts 1 and 5 (European Standards EN 50 014 and 50 018 respectively) and is normally referred to as an Ex'd' motor. The installation is very safe but the solid state relay is subject to overloads which can cause the relay to break down and the motor control to fail.

The continental approach has been to provide a three phase motor protected to a lesser standard see British Standards BS 5501 part 6 (European Standard EN 50 019) and is normally referred to as an Ex'e' motor. This type of motor is substantially cheaper than the Ex'd' motor but to prevent a dangerous overheating of the Ex'e' motor it is necessary to provide a carefully matched and therefore expensive contactor to break the current supply in the event of overheating. Furthermore to ensure safety it is necessary to locate the contactor well away from the pump which in a typical forecourt installation means the kiosk. To control this contactor it is necessary to run the contactor controls from a solid state pump relay in the pump casing back to the remote contactor and then run the cables for the power supplies from the remote contactor back to the pump and to the motor. This is expensive in cabling and when a typical forecourt with several pumps is considered expense is clearly multiplied by the number of pumps. Furthermore the motor itself is inherently less safe than a conventional Ex'd' motor.

In US-A-3335323 an electrical apparatus is disclosed for providing protection against fire and explosive hazards.

According to the present invention an electric motor enclosed in a flameproof housing and one or more sealed flameproof apertures in the housing to provide for entry of wiring into the housing for connecting the motor to an exterior power supply, the housing comprises a body shell having a first end member in which one end of the rotor is journalled and a second end member in which the other end of the rotor is journalled, characterised in that the housing also encloses a first cavity, in which cavity a remotely operable contractor is mounted, the contactor being wired operatively to the motor so as to control the remote on and off switching of the motor, in that the housing also defines a second cavity or in that a wall means is mounted on the housing defining a second cavity, the second cavity having entries for the cables from the power supply and for the leads provided for a remote contactor coil energizing signal, the second cavity containing a terminal block receiving the wiring of the cables and the leads, in that wiring is provided from the block to the contactor operative to control the contactor, and in that wiring is provided from the block to the contactor for supplying power to the motor.

By locating the contactor adjacent the motor stator and rotor within the flameproof housing several important advantages ensue. First the contactor control cables can be provided as a short run from a solid state relay within the pump casing thereby saving a long control cable run to a remote contactor. Secondly the power cables need only be run once from the kiosk to the pump and then on to the next pump thereby considerably shortening the power cable runs. Thirdly the risk of overloading the relay is eliminated by considerably reducing the maximum current to the relay to typically less than 0. 1 amps at 230 volts, and this reduces pump failure and consequential maintenance. Fourthly the motor is rendered inherently much safer. Fifthly matched contactors are not required which reduces costs.

Preferably the second cavity is defined by a part of the second end member so that the second end member at least partly encloses a second cavity providing a terminal block housing. In this way a simple casting may be provided which is economically advantageous. Further economies result if both cavities are provided at least partially in the second end member.

Preferably access covers for each cavity are provided to give easy access to the contactor and a terminal block in the second cavity. In order to ensure that the contactor cavity is fully flameproofed the contactor cavity access plate is carefully dimensioned with a planar flanged and bolted sealing joint of a width at least 9 mm from the interior to the bolt holes and preferably with a total width across the face of the joint not less than 12.5 mm and preferably 22 and 30 mm.

In order to prevent a pressure blow out causing a flash between the two cavity covers the covers are preferably arranged so that the sealing plane of each cover are in separate planes. One cover plate may be facing away radially with respect to the motor axis to the other cover plate but it is most convenient for installation and maintenance to have both cover plate facing in a single direction at one end of the motor. In order to provide planar separation of the sealing surfaces it is preferable to set one plate back from the other to obtain a planar separation of at least 4 mm and for the sake of safety this separation should be preferably between 15 and 25 mm.

Such an electric motor may suitably be employed in a forecourt petrol pump having a casing, a hose, a gun type lever operable nozzle on the hose, a pump control means in the casing operable by the gun type lever, the control means including a relay to operate a pump motor contactor.

In order that the invention may be fully understood, preferred embodiments thereof will now be described with reference to the accompanying drawings in which:-

Figure 1 is a longitudinal cross-sectional view of a flameproof housing in accordance with this invention and enclosing a squirrel cage motor;

Figure 2 is a transverse cross-sectional view of the housing shown in Figure 1.

Figure 3 is a cross-section through that part of the housing through which leads connecting a terminal block to a contactor pass and which incorporates a flameproof barrier;

Figures 4 and 5 shows a modification of the way in which the leads are held in a flameproof barrier shown in Figure 3;

Figure 6 shows diagrammatically a typical forecourt petrol pump having the motor of Figure 1 and

Figure 7 shows in partial cross-section a manual resetting thermal cut-out fitted as an optional feature to the housing of the motor of Figure 1.

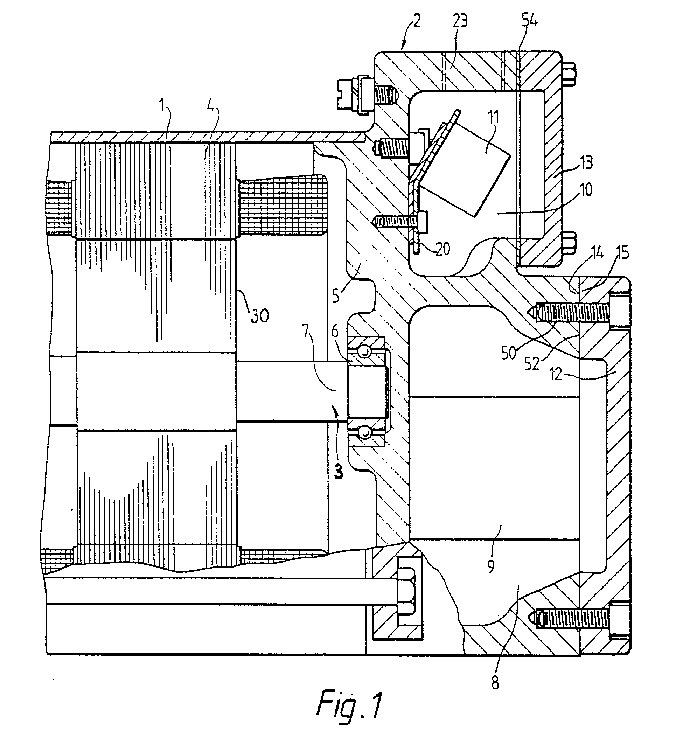

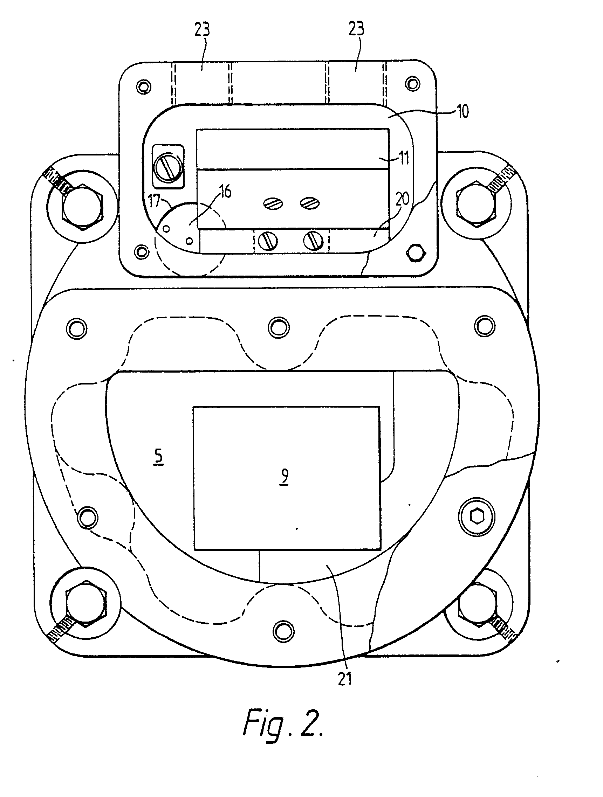

The flameproof housing shown in Figures 1 and 2 comprises a formed steel sheet body 1 manufactured from carbon steel sheet, a first end member 44 (not shown in Figure 1) and a second end member 2, a rotor shaft 3 for the rotor 30 of a three phase squirrel cage induction motor being rotatably supported in the first and second end members with the motors' stator 4 located within the shell body 1.

The second end member 2 comprises a casting having a wall 5 housing centrally thereof a bearing 6 for end 7 of the rotor shaft 3, a first cavity 8 formed in the casting housing a conventional 3 phase contactor 9 and a second cavity 10 housing a terminal block 11. A cover plate 12 seals the first cavity 8 and a cover plate 13 seals the second cavity 10. The flatness and width of the flange faces 14 of the first cavity 8 and the mating surfaces 15 of the cover plate 12 must be such as to provide a flameproof barrier between the inside of the cavity 8 and the atmosphere surrounding the casting, meeting the requirements set out in the aforementioned BSI standard 5501 part 5 (EN 50 018).

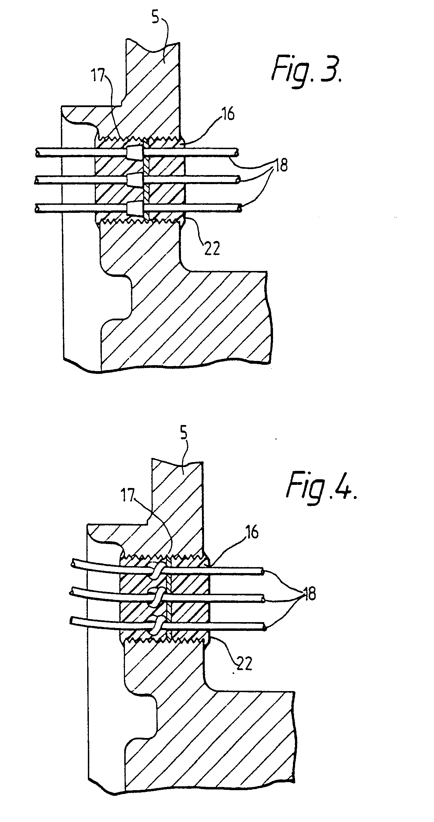

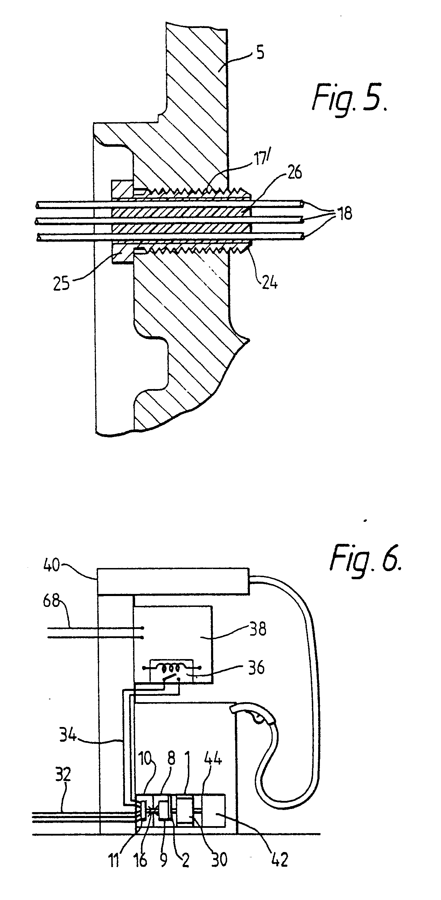

The seal between the cover plate 13 and the second cavity 10 is not so critical and need not necessarily be flameproof as a flameproof barrier 16 is provided between the cavity 10 and the interior of the shell body 1. The barrier 16 may be formed from a two-part epoxy quick setting putty inserted in an aperture 17 in the wall 5 through which passes leads 18 from the terminal block 11 mounted on a bracket 20 in the cavity 10, the leads then passing through another aperture 21 in the wall 5 to the contactor 9. The leads pass through a separator 22 in the aperture 17 and either have cable clips fitted to the leads, as shown in Figure 3, or the leads are knotted as shown in Figure 4 to provide a firm anchorage in the epoxy quick setting putty. In a further embodiment shown in Figure 5 the aperture 17′ is threaded and a gland or bushing 24 with hexagonal head 25 is screwed into the aperture. The cables 18 are set into the gland with a resin 26 and the gland is given an outer coating of a suitable retainer such as Loctite (Trade Mark) to prevent vibration from loosening the gland.

Thus the enclosure formed by the body shell 1 and the cavity 8 is rendered flameproof, communication between the shell and cavity 8 being provided by the aperture 21. The leads from the motor are connected to the contactor 9 via the aperture 21 and leads from the contactor are passed through the flameproofed aperture 17 to the cavity 10.

It is not necessary for the enclosure for the terminal block 11 formed by cavity 10 to be part of the casting, it could be a separate box but making the enclosure an integral part of the end member saves costs and allows for short runs of lead between the terminal block 11 and the contactor 9.

One or more cable entries 23 are provided at the top of the casting leading into the cavity 10 to accommodate power cables 32 and leads 34 for a contactor coil energizing signal from a solid state relay 36 in the computing head 38 of a petrol pump 40 (see Fig. 6).

The housing described herein is adapted for a motor having a shaft extending from the bearing 6 out of the first end member 44 to a pump 42 but a double ended shaft may be used. The first end member has a shaft to housing bearing (not shown) with a flame restricting path which forms a flameproof joint (of the kind for instance as shown in BS 5501 Part 5 (EN 50 018) entitled Flameproof enclosure 'd'- see Figure 15 or Figure 17).

The enclosure formed by the end member 44, shell 1 and cavity 8 sealed by cover plate 12 is constructed to withstand a predetermined internal pressure so that it will contain an explosion or rapid pressure increase within the housing. The sealing of the cover plate 12 onto the casting forming wall 5 as previously indicated is carefully formed to standard BS 5501 Part 5 (EN 50 018) and the flange faces 14 and the metal to metal mating surfaces 15 have a surface finish of 6.3 μ M. The width of the sealing joint from the interior to bolt hole 50 is a minimum of 8 mm according to the above standard but preferably at least 9 mm. The total width of the flanged joint 52 across the bolt holes is between 22 and 30 mm and with a minimum requirement of 12.5 mm and preferably 26 mm.

It will be seen in Figure 1 that cover plate 13 with its planar sealing joint 54 is set back from joint 52, the planes of the joints being parallel and separated from each other by at least 4 mm and preferably between 15 and 25 mm. The reason for this is to prevent pressure piling jumping across the gap between the plates and is an important feature of the housing design. Whilst similar protection would be given by placing the covers on diametrically opposite sides of the housing so they faced away from each other, it is more convenient for installation and maintenance to have both covers facing the same way and preferably facing axially outwards.

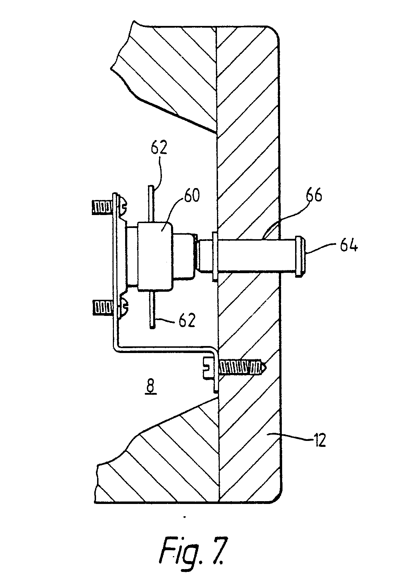

In Figure 7 a thermal cut-out 60 is shown which may be fitted as an optional item to the inside of cover plate 12. The cut-out is connected by leads 62 in the operating coil circuit of the contactor 9. A manual reset button 64 projects through a small close fitting aperture 66 in the cover plate such as will not destroy the flameproof integrity of the cover plate.

The cut-out 60 is provided to give additional safety for the motor so that when a predetermined excess temperature is reached in the enclosure formed in shell 1 and cavity 8, the contactor operating circuit is broken and the motor is switched off.

A typical layout of a forecourt pump 40 is shown in Figure 6 in which the described flameproofed motor is fitted. It will be seen that the only high power cables running to the forecourt pump are those at 32 carrying a normal full load of about 2.2 amps for a 230 volt 0.5 Hp (0.37 kW) motor. Leads 68 for very low power signal currents run from the computer head 38 to the kiosk where the pump monitor is located. Low power ancillary leads may of course be provided for example pump illumination.

Whilst the embodiment described above utilises a three phase motor, a single phase motor may be used instead with an appropriate contactor mounted in the first cavity 8 along with the capacitor and centrifugal switch required for a capacitor start induction motor.

By providing a flameproof housing as described above which contains both the motor and the contactor, substantial cable runs are avoided which reduces the costs of a petrol pump forecourt installation.

Whilst the flameproof housing disclosed herein has been described with reference to its use in a petrol pump, it will be appreciated that such a housing and motor may be used to drive other forms of machinery, such as fans, in a hazardous environment.

**Claims**

1. An electric motor enclosed in a flameproof housing and one or more sealed flameproof apertures in the housing to provide for entry of wiring into the housing for connecting the motor to an exterior power supply, the housing comprising a body shell having a first end member in which one end of the rotor is journalled and a second end member in which the other end of the rotor is journalled, characterised in that the housing (1, 5) also encloses a first cavity (8), in which cavity (8) a remotely operable contactor (9) is mounted, the contactor being wired operatively to the motor so as to control the remote on and off switching of the motor, wherein the housing also defines a second cavity (10) or wherein a wall means is mounted on the housing defining a second cavity (10), the second cavity having entries (23) for the cables (32) from the power supply and for the leads (34) provided for a remote contactor coil energizing signal, the second cavity (10) containing a terminal block (11) receiving the wiring of the cables and the leads, in that wiring (18) is provided from the block to the contactor operative to control the contactor, and in that wiring (18) is provided from the block to the contactor for supplying power to the motor.

2. An electric motor as claimed in claim 1 wherein the second cavity (10) containing the terminal block (11) is provided outside the flameproof housing, wherein the flameproof aperture(s) (17) extend between the second cavity (10) for the terminal block and the interior of the flameproof housing, and wherein the wiring (18) is passed from the block through the flameproof aperture or apertures to the housing of the motor and from the housing through an opening (27) to the contactor (9) in the first cavity (8).

3. An electric motor as claimed in claim 1 wherein the second cavity (10) is defined by a part (5) of the second end member (2), so that the second end member at least partly encloses the second cavity.

4. An electric motor as claimed in any preceding claim wherein one or other of the cavities (8, 10) are provided with a cover plate (12, 13) which can be removed to give access to the one or other of the cavities from the exterior of the housing.

5. An electric motor as claimed in any one of claims 1 to 3 wherein both cavities (8, 10) are provided with a cover plate (12, 13) which can be removed to give access to the cavities from the exterior of the housing.

6. An electric motor as claimed in claim 5 wherein both cover plates are arranged to seal around paths (52, 54) in planes separated from each other.

7. An electric motor as claimed in claim 6 wherein the sealing planes (52, 54) are substantially parallel and separated from each other by at least 4 mm and preferably between 15 and 25 mm.

8. An electric motor as claimed in any preceding claim further characterised in that the first cavity (8) is formed within at least a part (5) of the second end member (2) so that the second end member at least partly encloses the first cavity (8).

9. An electric motor as claimed in any preceding claim wherein the first cavity (8) for the contactor (9) is covered by a cover plate (12) having a planar flanged and bolted sealing joint (52) of a width across the joint at least 9 mm from the interior to bolt holes (50) for bolts securing the plate and preferably with a total width across the bolt holes of between 22 and 30 mm.

10. An electric motor as claimed in any preceding claim wherein the motor is a three phase AC motor of the squirrel cage induction type.

11. A forecourt petrol pump (70) having an electric motor as claimed in any preceding claim and having a casing, hose, a gun type lever operable nozzle on the hose, pump control means in the casing operable by the gun type lever, the control means including a relay to operate the pump motor contactor.

**Patentansprüche**

1. Elektromotor, der ein explosionsgeschütztes Gehäuse (1, 5) als Kapselung sowie eine oder mehrere abgedichtete explosionsgeschützte Öffnungen (17) im Gehäuse aufweist, um so ein Einführen der Verdrahtung in das Gehäuse zu ermöglichen, damit der Motor an eine externe Stromversorgung angeschlossen werden kann, wobei das Gehäuse einen Gehäusemantel (1) mit einem ersten Endelement, in dem ein Ende des Rotors (30) gelagert ist, und ein zweites Endelement (2) umfaßt, in dem das andere Ende des Rotors gelagert ist, dadurch gekennzeichnet, daß das Gehäuse (1, 5) ebenfalls einen ersten Hohlraum (8) umgibt, wobei in diesem Hohlraum (8) ein fernbedienbares Schütz (9) montiert ist, wobei dieses Schütz in betriebswirksamer Weise so mit dem Motor verdrahtet ist, daß das durch Fernbedienung erfolgende Ein- und Ausschalten des Motors gesteuert werden kann, wobei das Gehäuse ebenfalls einen zweiten Hohlraum (10) definiert oder am Gehäuse eine Wandvorrichtung montiert ist, die einen zweiten Hohlraum (10) festlegt, wobei der zweite Hohlraum Durchführungen (23) für die Kabel (32) der Stromversorgung und für die Zuleitungen (34) aufweist, die für ein Fernübertragungserregersignal zur Schützspule vorgesehen sind, wobei der zweite Hohlraum (10) eine Klemmenplatte (11) für die Verdrahtung der Kabel und Zuleitungen enthält, daß die Verdrahtung (18) von der Klemmenplatte bis zum Schütz vorgesehen ist, um so in betriebswirksamer Weise das Schütz steuern zu können, und daß die Verdrahtung (18) von der Klemmenplatte bis zum Schütz vorgesehen ist, um den Motor mit Strom zu versorgen.

2. Elektromotor gemäß Anspruch 1, wobei der zweite Hohlraum (10), in dem sich die Klemmenplatte (11) befindet, außerhalb des explosionsgeschützten Gehäuses vorgesehen ist, wobei sich die explosionsgeschützte(n) Öffnung(en) (17) zwischen dem zweiten Hohlraum (10) für die Klemmenplatte und dem Innern des explosionsgeschützten Gehäuses erstreckt/erstrecken, und wobei die Verdrahtung (18) von der Platte aus durch die explosionsgeschützte(n) Öffnung(en) bis zum Gehäuse des Motors und vom Gehäuse aus durch eine Öffnung (27) bis zum Schütz (9) im ersten Hohlraum (8) geführt ist.

3. Elektromotor gemäß Anspruch 1, wobei der zweite Hohlraum (10) durch ein Teil (5) des zweiten Endelements (2) definiert ist, so daß das zweite Endelement den zweiten Hohlraum zumindest teilweise umgibt.

4. Elektromotor gemäß irgendeinem der vorstehenden Ansprüche, wobei einer oder mehrere der Hohlräume (8, 10) mit einer Abdeckplatte (12, 13) ausgestattet sind, die entfernt werden kann, um so einen Zugang zu dem einen oder mehreren der Hohlräume vom Gehäuseäußeren aus zu ermöglichen.

5. Elektromotor gemäß irgendeinem der Ansprüche 1 bis 3, wobei beide Hohlräume (8, 10) mit einer Abdeckplatte (12, 13) versehen sind, die entfernt werden kann, um so einen Zugang zu den Hohlräumen vom Gehäuseäußeren aus zu ermöglichen.

6. Elektromotor gemäß Anspruch 5, wobei beide Abdeckplatten so angeordnet sind, daß eine Abdichtung um Bahnen (52, 54) herum in voneinander getrennten Ebenen erfolgt.

7. Elektromotor gemäß Anspruch 6, wobei die Abdichtungsebenen (52, 54) im wesentlichen parallel und um zumindest 4 mm sowie vorzugsweise 15 bis 25 mm voneinander getrennt angeordnet sind.

8. Elektromotor gemäß irgendeinem der vorstehenden Ansprüche, weiterhin dadurch gekennzeichnet, daß der erste Hohlraum (8) zumindest innerhalb eines Teils (5) des zweiten Endelements (2) so ausgebildet ist, daß das zweite Endelement zumindest teilweise den ersten Hohlraum (8) umgibt.

9. Elektromotor gemäß irgendeinem der vorstehenden Ansprüche, wobei der erste Hohlraum (8) für das Schütz (9) mit einer Abdeckplatte (12) versehen ist, die eine planare geflanschte und verschraubte Dichtfläche (52) besitzt, deren Breite über die Dichtfläche vom Innern aus zu den Schraubbohrungen (50) für die Schrauben, von denen die Platte gehalten wird, zumindest 9 mm beträgt, und wobei die Gesamtbreite über die Schraubbohrungen vorzugsweise bei 22 bis 30 mm liegt.

10. Elektromotor gemäß irgendeinem der vorstehenden Ansprüche, wobei es sich bei dem Motor um einen Dreiphasenwechselstrommotor in Kurzschlußläuferausführung handelt.

11. Tankstellenkraftstoffpumpe (70) mit einem Elektromotor gemäß irgendeinem der vorstehenden Ansprüche, ausgestattet mit einem Gehäuse, einem Schlauch, einem über einen Zapfpistolenhebel bedienbaren Mundstück am Schlauch, Pumpensteuervorrichtungen im Gehäuse, die über den Zapfpistolenhebel betätigt werden können, wobei die Steuervorrichtungen ein Relais umfassen, um so das Schütz des Pumpenmotors steuern zu können.

**Revendications**

1. Moteur electrique enfermé dans une enceinte blindée antidéflagrante (I, 5) et une ou plusieurs ouvertures (17) scellées à l'épreuve des flammes ménagées dans l'enceinte pour permettre l'entrée de câbles dans l'enceinte afin de raccorder le moteur à une source de courant extérieure, l'enceinte comprenant un corps (1) ayant un premier élément d'extrémité dans lequel prend appui une extrémité du rotor (30) et un second élément d'extrémité (2) dans lequel prend appui l'autre extrémité du rotor, caractérise en ce que l'enceinte (I, 5) comporte également une première cavité, cavité (8) dans laquelle est monté un contacteur (9) commande à distance, le contacteur étant relie par fil au moteur de façon à commander à distance la mise en marche et l'arrêt du moteur, dans lequel l'enceinte delimite également une seconde cavité (10) ou dans lequel une paroi est montée sur l'enceinte pour délimiter une seconde cavité (10), la seconde cavité comportant des entrées (23) pour les câbles (32) provenant de la source de courant et pour les conducteurs (34) prévus pour un signal excitant à distance la bobine du contacteur, la seconde cavité contenant un bloc de connexion (11) recevant le câblage des câbles et des conducteurs, en ce que le câblage (18) est prévu depuis le bloc jusqu'au contacteur de manière active pour commander le contacteur, et en ce que le câblage (18) est prévu depuis le bloc jusqu' au contacteur pour fournir du courant au moteur.

2. Moteur électrique suivant la revendication 1, dans lequel la seconde cavité (10) contenant le bloc de connexion (11) est prévue à l'extérieur de l'enceinte blindée antidéflagrante, dans lequel la ou les ouverture(s) (17) à l'épreuve des flammes s'étend(ent) entre la seconde cavité (10) destinée au bloc de connexion et l'intérieur de l'enceinte blindée antidéflagrante, et dans lequel le câblage (18) passe depuis le bloc à travers la ou les ouverture(s) à l'épreuve des flammes jusqu'à l'enceinte du moteur et depuis l'enceinte à travers une ouverture (27) jusqu'au contacteur (9) dans la première cavité (8).

3. Moteur électrique suivant la revendication 1, dans lequel la seconde cavité (10) est délimitée par une partie (5) du second élément d'extrémité (2), de sorte que le second élément d'extrémité entoure au moins partiellement la seconde cavité.

4. Moteur électrique suivant l'une ou l'autre des revendications précédentes, dans lequel l'une ou l'autre des cavités (8, 10) est pourvue d'une plaque de couverture (12, 13) qui peut être enlevée pour donner accès à l'une ou à l'autre des cavités, depuis l'extérieur de l'enceinte.

5. Moteur électrique suivant l'une ou l'autre des revendications 1 à 3, dans lequel les deux cavités (8, 10) sont pourvues d'une plaque de couverture (12, 13) qui peut être enlevée pour donner accès aux cavités, depuis l'extérieur de l'enceinte.

6. Moteur électrique suivant la revendication 5, dans lequel les deux plaques de couverture sont agencées de façon à s'appliquer hermétiquement suivant des joints (52, 54) qui se trouvent dans des plans distincts l'un de l'autre.

7. Moteur electrique suivant la revendication 6, dans lequel les plans d'obturation (52, 54) sont substantiellement parallèles l'un à l'autre et sont écartés l'un de l'autre d'au moins 4 mm et de préférence d'une distance comprise entre 15 et 25 mm.

8. Moteur electrique suivant l'une ou l'autre des revendications précédentes, caractérisé en outre en ce que la première cavité (8) est formée à l'intérieur d'au moins une partie (5) du second élément d'extrémité (2), de sorte que le second élément d'extrémité entoure au moins partiellement la première cavité (8).

9. Moteur electrique suivant l'une ou l'autre des revendications précédentes, dans lequel la première cavité (8) destinée au contacteur (9) est couverte par une plaque de couverture (12) comportant un joint d'étanchéité (52) à bride et boulons, dont la largeur en travers du joint est d'au moins 9 mm depuis l'intérieur des trous de boulon (50) destinés aux boulons de fixation de la plaque, et de préférence dont la largeur totale en travers destrous de boulon est comprise entre 22 et 30 mm.

10. Moteur électriquè suivant l'une ou l'autre des revendications précédentes, dans lequel le moteur est un moteur à courant alternatif triphasé du type à induction à cage d'écureuil.

11. Pompe à essence (70) pour aire de ravitaillement, comprenant un moteur electrique suivant l'une ou l'autre des revendications précédentes et comportant un boîtier, un tuyau souple, un pistolet monté sur le tuyau souple et actionne par un levier, des moyens de commande de la pompe disposes dans le boîtier et actionnables par le levier du pistolet, les moyens de commande comprenant un relais pour actionner le contacteur du moteur de la pompe.

Fig.1

Fig. 2.

Fig. 3.

Fig. 4.

Fig. 5.

Fig. 6.

4

Fig. 7.